# EUROPEAN PATENT APPLICATION

(11) **EP 4 826 390 A1**
(43) Date of publication of application: **21.10.2026**
(21) Application number: 25744859.7
(22) Date of filing: 20.01.2025
(51) Int. Cl.: G01N 35/10

(54) **SPECIMEN ANALYSIS DEVICE AND NOZZLE CLEANING METHOD**

(30) Priority: 25.01.2024 JP 2024009259
(71) Applicant: Fujirebio Inc., Tokyo 107-0052 (JP)
(72) Inventor: KAWATA, Akira, Tokyo 107-0052 (JP); KAWADA, Hidenobu, Tokyo 107-0052 (JP); OHASHI, Naoki, Tokyo 107-0052 (JP)
(74) Representative: Wunderlich & Heim Patentanwälte PartG mbB
(86) International application number: PCT/JP2025/001580
(87) International publication number: WO 2025/159045

(57) **Abstract**

In the present invention, a branch pipe is provided in a cleaning tank. The inside of the branch pipe serves as a flow path for injecting a nozzle cleaning liquid into the cleaning tank. In an advanced cleaning mode, a first nozzle cleaning process and a second nozzle cleaning process are sequentially performed. In the first nozzle cleaning process, a BF cleaning nozzle is cleaned using the nozzle cleaning liquid. In the second nozzle cleaning process, the BF cleaning nozzle is cleaned using a BF cleaning liquid. The nozzle cleaning liquid is an alkaline cleaning liquid. The BF cleaning liquid is a neutral cleaning liquid.

## Description

### TECHNICAL FIELD

The present invention relates to a specimen analyzer and a nozzle cleaning method, and in particular to a technique for cleaning a BF cleaning nozzle.

### BACKGROUND

A specimen analyzer is an apparatus that analyzes specimens collected from a subject, such as blood and urine. An immunoassay apparatus is a known example of the specimen analyzer. The immunoassay apparatus is an apparatus that measures target substances in a specimen by means of an immune reaction (antigen-antibody reaction). In the immunoassay apparatus, cleaning for BF separation is performed after the immune reaction (although the term "B/F separation" is also accepted, the term "BF separation" is adopted in the present application). Hereinafter, the cleaning for BF separation is referred to as "BF cleaning".

More specifically, BF separation is a process for separating substances bound to a solid phase (Bound) from substances not bound to the solid phase (Free) after the immune reaction. Magnetic particles are generally used as the solid phase. Antibodies (or antigens) are immobilized on a surface of each magnetic particle, and antigens (or antibodies) in the specimen bind to the antibodies (or the antigens). As such, an immune complex is formed. During BF cleaning, a BF cleaning solution is injected into a reaction vessel with the magnetic particles (i.e., immune complexes) captured in the reaction vessel by magnetic force. The BF cleaning solution is then suctioned from the reaction vessel, thereby removing unreacted substances from the reaction vessel. In other words, only the unreacted substances are washed away.

In the immunoassay apparatus, BF cleaning equipment equipped with a BF cleaning nozzle performs BF cleaning. Typically, the BF cleaning nozzle is a composite nozzle composed of an integrated discharge nozzle or dispensing nozzle and suction nozzle. The BF cleaning equipment has a cleaning tank for cleaning the BF cleaning nozzle after use.

After use, the BF cleaning nozzle itself is cleaned using the cleaning tank. In this case, the BF cleaning nozzle is generally cleaned with a BF cleaning solution. Specifically, the BF cleaning solution is injected into the cleaning tank from the discharge nozzle of the BF cleaning nozzle with the BF cleaning nozzle inserted in the cleaning tank. The BF cleaning solution in the cleaning tank is then suctioned by the suction nozzle of the BF cleaning nozzle. The discharge and suction of the BF cleaning solution is repeated as necessary. The BF cleaning solution is typically a neutral cleaning solution containing a buffer and a surfactant.

Patent Document 1 describes an analyzer having a detergent storage tank. During cleaning of a dispensing nozzle, the dispensing nozzle is inserted in the detergent storage tank. The detergent storage tank has a supply port formed therein for supplying detergent for nozzle cleaning. The detergent storage tank also has a supply port formed therein for supplying a cleaning solution for tank cleaning.

Patent Document 2 describes a nozzle cleaning unit for cleaning a dispensing nozzle. The nozzle cleaning unit has a cleaning tank. A cleaning solution is sprayed onto a cleaning nozzle with the dispensing nozzle inserted in the cleaning tank.

Patent Documents 1 and 2 do not describe the BF cleaning nozzle. In particular, these patent documents do not describe using the nozzle cleaning solution along with the BF cleaning solution.

### CITATION LIST

### PATENT LITERATURE

| | |
|---|---|
| Patent Document 1: | WO 2014/175018 |
| Patent Document 2: | JP 2011-78881 A |

### SUMMARY

### TECHNICAL PROBLEM

When the BF cleaning nozzle is not cleaned properly; that is, when the previous reaction solution (especially the previous specimen) remains adhered to the BF cleaning nozzle surface, the previous reaction solution will be mixed into the subsequent reaction solution as a contaminant during the next BF cleaning. This phenomenon is referred to as carryover. For highly accurate or sensitive measurements, cross-contamination between the vessels (or between the reaction solutions) via the BF cleaning nozzle needs to be minimized. To achieve this, it is necessary to improve the cleanliness of the BF cleaning nozzle itself. Improving the cleanliness of the BF cleaning nozzle is particularly required when the concentration of reagents or specimens in the reaction solution is high, or when special reagents unsuitable for cleaning with the BF cleaning solution are used.

An objective of the present invention is to provide a specimen analyzer that can improve the cleanliness of a BF cleaning nozzle. Alternatively, an objective of the present invention is to provide a nozzle cleaning method that can improve the cleanliness of the BF cleaning nozzle.

### SOLUTION TO PROBLEM

A specimen analyzer according to the present invention includes a BF cleaning nozzle having a discharge nozzle that discharges a BF cleaning solution into a reaction vessel during BF cleaning, and a suction nozzle that suctions a liquid in the reaction vessel during the BF cleaning; a cleaning tank in which the BF cleaning nozzle is inserted during cleaning of the BF cleaning nozzle; an injection mechanism that injects a nozzle cleaning solution different from the BF cleaning solution into the cleaning tank; and a control section that controls an operation of the BF cleaning nozzle and an operation of the injection mechanism. In this specimen analyzer, the control section controls, during cleaning of the BF cleaning nozzle using the cleaning tank, first nozzle cleaning that cleans the BF cleaning nozzle with the nozzle cleaning solution and second nozzle cleaning that cleans the BF cleaning nozzle with the BF cleaning solution.

A cleaning method according to the present invention is a nozzle cleaning method for cleaning a BF cleaning nozzle. The BF cleaning nozzle includes a discharge nozzle that discharges BF cleaning solution into a reaction vessel during BF cleaning, and a suction nozzle that suctions a liquid in the reaction vessel during the BF cleaning. The nozzle cleaning method according to the present invention includes a first cleaning step of cleaning a portion of the BF cleaning nozzle to be cleaned that is inserted in a cleaning tank with a nozzle cleaning solution different from the BF cleaning solution, and a second cleaning step of cleaning the portion to be cleaned that is inserted in the cleaning tank with the BF cleaning solution.

### ADVANTAGEOUS EFFECTS OF INVENTION

According to the present invention, it is possible to provide a specimen analyzer that can improve the cleanliness of a BF cleaning nozzle. Alternatively, according to the present invention, it is possible to provide a nozzle cleaning method that can improve the cleanliness of the BF cleaning nozzle.

### BRIEF DESCRIPTION OF DRAWINGS

[FIG. 1] FIG. 1 is a diagram showing an example configuration of a specimen analyzer according to an embodiment.
[FIG. 2] FIG. 2 is a diagram showing alternating implementation of BF cleaning and nozzle cleaning.
[FIG. 3] FIG. 3 is a diagram showing BF cleaning equipment according to the embodiment.
[FIG. 4] FIG. 4 is a diagram showing the relationship between a first central axis and a second central axis.
[FIG. 5] FIG. 5 is a diagram showing an offset of the second central axis in the horizontal direction.
[FIG. 6] FIG. 6 is a diagram showing a first example of a nozzle cleaning operation.
[FIG. 7] FIG. 7 is a diagram showing a second example of the nozzle cleaning operation.
[FIG. 8] FIG. 8 is a flowchart showing an example operation of the BF cleaning equipment.
[FIG. 9] FIG. 9 is a diagram showing a first variation of a cleaning tank.
[FIG. 10] FIG. 10 is a diagram showing a second variation of the cleaning tank.
[FIG. 11] FIG. 11 is a diagram showing a third variation of the cleaning tank.
[FIG. 12] FIG. 12 is a diagram showing BF cleaning in a cartridge-based specimen analyzer.

### DESCRIPTION OF EMBODIMENTS

Hereinafter, an embodiment will be described with reference to the drawings.

### (1) Overview of Embodiment

A specimen analyzer according to the embodiment has a BF cleaning nozzle, a cleaning tank, an injection mechanism, and a control section. The BF cleaning nozzle includes a discharge nozzle that discharges a BF cleaning solution into a reaction vessel during BF cleaning, and a suction nozzle that suctions a liquid in the reaction vessel during the BF cleaning. The BF cleaning nozzle is inserted in the cleaning tank during cleaning of the BF cleaning nozzle. The injection mechanism injects a nozzle cleaning solution, which is different from the BF cleaning solution, into the cleaning tank. The control section controls the operation of the BF cleaning nozzle and the operation of the injection mechanism. During cleaning of the BF cleaning nozzle using the cleaning tank, the control section controls first nozzle cleaning that cleans the BF cleaning nozzle with the nozzle cleaning solution, and second nozzle cleaning that cleans the BF cleaning nozzle with the BF cleaning solution.

According to the above configuration, the first nozzle cleaning and the second nozzle cleaning are applied to the BF cleaning nozzle, and thus a higher level of cleanliness of the BF cleaning nozzle can be achieved as compared to the case where only the second nozzle cleaning is applied. This makes it possible to reduce cross-contamination that occurs via the BF cleaning nozzle.

In the embodiment, the BF cleaning nozzle is a composite nozzle composed of an integrated discharge nozzle and suction nozzle. The discharge nozzle is provided at a height where contamination does not occur. A portion of the BF cleaning nozzle to be cleaned is therefore a portion of the suction nozzle; specifically, a portion that includes the area that comes into contact with a reaction solution. A plurality of types of nozzle cleaning solutions may be used stepwise or simultaneously. A plurality of types of nozzle cleaning solutions with different concentrations may be used selectively.

In the embodiment, during the first nozzle cleaning, the nozzle cleaning solution is injected into the cleaning tank by the injection mechanism, and then the nozzle cleaning solution in the cleaning tank is suctioned by the suction nozzle. During the second nozzle cleaning, the BF cleaning solution is discharged from the discharge nozzle into the cleaning tank, and then the BF cleaning solution in the cleaning tank is suctioned by the suction nozzle.

The above configuration eliminates the need for dedicated equipment for draining the solution in the cleaning tank. Furthermore, because the injection mechanism is provided separately from the BF cleaning nozzle, the injection timing, the injection amount, the injection speed, and the like of the nozzle cleaning solution may be set as desired. By suctioning the nozzle cleaning solution and the BF cleaning solution through the suction nozzle, it is also possible to improve the cleanliness of the interior of the suction nozzle and a pipe connected to the suction nozzle.

In the embodiment, the second nozzle cleaning is performed after the first nozzle cleaning. This makes it possible to use a nozzle cleaning solution with a strong cleaning effect, assuming that the BF cleaning solution is used as a rinse solution.

In the embodiment, at the start of the first nozzle cleaning, the nozzle cleaning solution is injected into the cleaning tank and stored therein, and then the BF cleaning nozzle is inserted into the cleaning tank (static cleaning method). Alternatively, at the start of the first nozzle cleaning, the nozzle cleaning solution is injected into the cleaning tank while the BF cleaning nozzle is being inserted into the cleaning tank or after the BF cleaning nozzle is inserted into the cleaning tank (dynamic cleaning method). According to the static cleaning method, it becomes easier to increase the contact time between the portion to be cleaned and the nozzle cleaning solution. According to the dynamic cleaning method, the cleaning solution is directly poured or sprayed onto the BF cleaning nozzle during nozzle cleaning.

In the embodiment, the injection mechanism has a flow path for injecting the cleaning solution into an interior space of the cleaning tank, and the flow path includes an opening facing the interior space of the cleaning tank. This configuration enables reliable and easy injection of the nozzle cleaning solution into the interior space of the cleaning tank. The configuration also makes it easier to spray the cleaning solution directly toward a highly contaminated area (typically, the lower end portion) of the portion to be cleaned.

In the embodiment, the cleaning tank has a first central axis that is a vertical axis. The flow path has a second central axis that is an inclined axis. The second central axis extends diagonally downward from the opening. The nozzle cleaning solution is injected from the opening along the second central axis. This configuration can facilitate generation of upstream/downstream or turbulent flow in the cleaning tank.

In the embodiment, the second central axis passes through a position offset from the first central axis in the horizontal direction. This configuration makes it easier for the nozzle cleaning solution to rotate in the cleaning tank. The cleanliness of the BF cleaning nozzle can be further improved when upward and downward movement or rotational movement of the nozzle cleaning solution is caused in the cleaning tank while the BF cleaning nozzle is inserted in the tank.

In the embodiment, the interior space of the cleaning tank has a truncated cone shape that widens upward. This configuration makes it possible to increase the volume of the cleaning tank while reducing the amount of solution remaining on the bottom surface of the cleaning tank after the nozzle cleaning solution is suctioned by the suction nozzle.

In a nozzle cleaning method according to the embodiment, a BF cleaning nozzle includes a discharge nozzle that discharges BF cleaning solution into the reaction vessel during BF cleaning and a suction nozzle that suctions a liquid in the reaction vessel during the BF cleaning. The nozzle cleaning method according to the embodiment includes a first cleaning step and a second cleaning step. In the first cleaning step, a portion of the BF cleaning nozzle to be cleaned that is inserted in the cleaning tank is cleaned with a nozzle cleaning solution different from the BF cleaning solution. In the second cleaning step, the portion to be cleaned, which is inserted in the cleaning tank, is cleaned with the BF cleaning solution. This method can improve the cleanliness of the BF cleaning nozzle through the combination of the first and second cleaning steps.

The nozzle cleaning method according to the embodiment includes a selection step. In the selection step, one of a first cleaning mode and a second cleaning mode is selected based on reference information including specimen analysis items. When the first cleaning mode is selected, the second cleaning step is performed after the first cleaning step. When the second cleaning mode is selected, the second cleaning step is performed without performing the first cleaning step.

For example, the first cleaning mode is selected when the degree of contamination of the BF cleaning nozzle is high, when a specific reagent that is difficult to clean is used, when a high concentration specimen, such as whole blood, is used, or when high-precision measurement is required. The first cleaning mode can achieve a higher level of cleanliness of the BF cleaning nozzle as compared to the second cleaning mode. On the other hand, the second cleaning mode is selected, for example, when the degree of contamination of the BF cleaning nozzle is low, when a general reagent is used, or when standard-precision measurement is required. The second cleaning mode is economical, as it can reduce consumption of nozzle cleaning solution.

In the embodiment, the BF cleaning solution is a neutral cleaning solution. The nozzle cleaning solution is an alkaline or acidic cleaning solution. When the second cleaning step is performed after the first cleaning step, the BF cleaning solution serves as a rinse solution. The nozzle cleaning solutions used for nozzle cleaning may be switched depending on the reagent used in specimen analysis. The concentration of the nozzle cleaning solution may be adjusted by the BF cleaning solution. In this case, injection of the nozzle cleaning solution and discharge of the BF cleaning solution are performed simultaneously or stepwise, and then the cleaning solution in the cleaning tank is suctioned by the suction nozzle.

### (2) Details of Embodiment

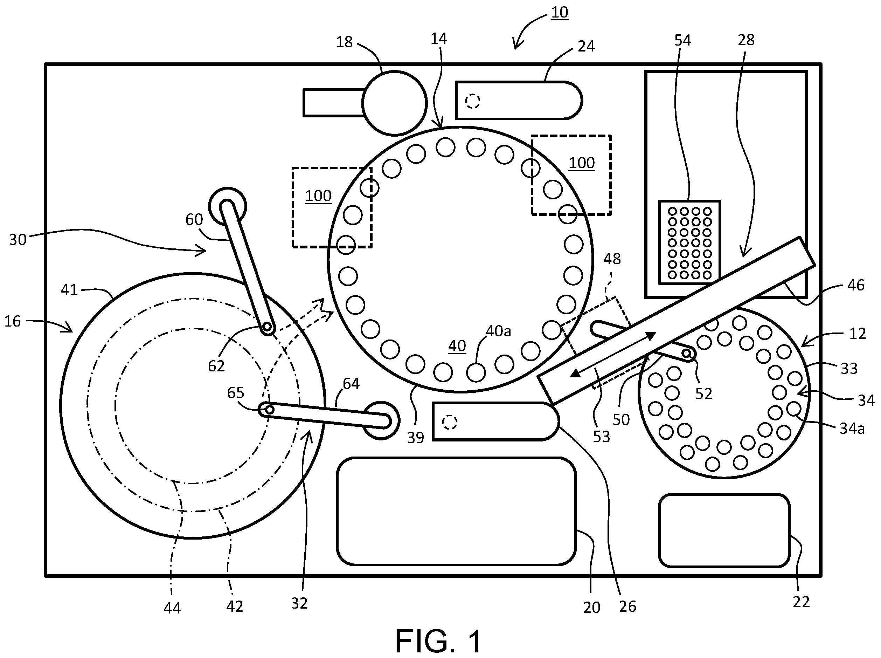

A specimen analyzer 10 according to the embodiment is shown in FIG. 1. FIG. 1 schematically shows a top surface of the specimen analyzer 10. This specimen analyzer 10 is an immunoassay apparatus that analyzes specimens by means of an immune reaction; that is, an antigen-antibody reaction. Specifically, the specimen analyzer 10 is an immunoassay apparatus that performs a chemiluminescent enzyme immunoassay (CLEIA).

In FIG. 1, the specimen analyzer 10 has a specimen supply section 12, a reaction section 14, a reagent supply section 16, a light detection section 18, a cuvette supply section 20, a substrate refrigerator 22, cuvette transfer mechanisms 24, 26, a specimen dispensing mechanism 28, and reagent dispensing mechanisms 30, 32, and further has a plurality of pieces of BF cleaning equipment 100.

The specimen supply section 12 has a turntable 33 that is a rotating base. The turntable 33 has a holding hole group 34 formed therein, and the holding hole group 34 includes a plurality of holding holes 34a. In the illustrated example, the holding hole group 34 is composed of an outer holding hole row including a plurality of holding holes 34a arranged in an annular shape, and an inner holding hole row including a plurality of holding holes 34a arranged in an annular shape. Each holding hole 34a is a portion that accommodates a specimen container which is the original container. The specimen container contains a specimen.

In the embodiment, the specimen is blood, such as serum, plasma, or whole blood. Other liquids collected from a living body, such as saliva or urine, may also be used as specimens. For example, the specimen containers are blood collection tubes containing blood, or other containers containing blood. The inspector manually installs the specimen containers into the respective holding holes 34a. The specimen containers may be installed automatically by means of a specimen container rack or a mechanism for transporting the specimen containers.

The specimen supply section 12 is provided with a barcode reader (BCR) (not shown). The BCR reads barcode labels affixed to the specimen containers held in the holding hole group 34. This allows specimen information, such as a specimen ID, to be read for each specimen. Based on the specimen ID, subject information, analysis items, specimen container type, and the like are identified. The analysis items are information that identifies the substance to be measured and the measurement method, and they are also referred to as test items. One or more reagents to be used are selected based on the analysis items.

The specimen dispensing mechanism 28 has a rail mechanism 46, a slide base 48, an arm 50, a nozzle 52, and the like. The rail mechanism 46 has a rail extending in a direction inclined with respect to the left-and-right direction and the depth direction of the apparatus. The slide base 48 is moved in a sliding manner along the rail (see reference numeral 53). A base end portion of the arm 50 is rotatably held by the slide base 48, and the nozzle 52 is disposed at a tip end portion of the arm 50.

The nozzle 52 is composed of a nozzle body and a nozzle tip. The nozzle tip is detachably attached to the nozzle body. The nozzle body is made of metal, and the nozzle tip is made of a resin that is transparent, translucent, or opaque. The nozzle tip is replaced after specimen dispensing.

The combination of sliding movement of the slide base 48 and pivoting movement of the arm 50 expands the movement range of the nozzle 52. Under the control of the control section (not shown in FIG. 1), during specimen dispensing, the specimen in the specimen container (original container) at the suction position is suctioned by the nozzle 52. The suctioned specimen is then discharged from the nozzle 52 into a specific cuvette on the reaction section 14. The discharge destination position may be fixed or may be changed dynamically. The cuvette corresponds to a specimen container and reaction vessel.

A tip rack 54 is a member that holds a plurality of nozzle tips. When the nozzle tip is replaced, the used nozzle tip is removed from the nozzle body and discarded. A tip end portion of the nozzle body is then inserted into an upper opening of a nozzle tip selected from the tip rack 54. The new nozzle tip is thus attached to the nozzle body. The tip rack is replaced by a tip rack replacement mechanism (not shown).

The reaction section 14 has a turntable 39 that is a rotating base or movable table. The turntable 39 has a holding hole group 40 formed therein, and the holding hole group 40 includes a plurality of holding holes 40a. The holding hole group 40 may be composed of an outer holding hole row including a plurality of holding holes arranged in an annular shape, and an inner holding hole row including a plurality of holding holes arranged in an annular shape. Each holding hole 40a is a portion that accommodates a cuvette. Reagents and specimens are injected into each cuvette in a stepwise manner. This causes occurrence of an immune reaction in each cuvette. The turntable 39 may be composed of a single annular member, or may be composed of a plurality of annular members arranged concentrically.

The specimen is measured, for example, based on the so-called two-step method. The two-step method includes a first immune reaction step using a first reagent containing a first antibody, a second immune reaction step using a second reagent containing a second antibody, an enzyme reaction step using a substrate (substrate solution), and a light detection step. The first immune reaction step, the second immune reaction step, and the enzyme reaction step are performed in the reaction section 14. Additionally, a BF cleaning step, a stirring step, and the like are performed in the reaction section 14.

In the BF cleaning step, the BF cleaning equipment 100 is used. In the embodiment, two pieces of BF cleaning equipment 100 that operate in parallel are provided. A greater number of pieces of BF cleaning equipment 100 may be provided, or a single piece of BF cleaning equipment 100 may be provided. The two pieces of BF cleaning equipment 100 have the same configuration. The specific configuration of the BF cleaning equipment 100 will be described in detail below.

The reagent supply section 16 includes a reagent tank 41that is a rotating refrigerator. The reagent tank 41 accommodates a reagent bottle row 42 and a reagent bottle row 44. Each of the reagent bottle rows 42 and 44 includes a plurality of reagent bottles. The reagent bottle contains a reagent. Each reagent used in the first immune reaction step contains a plurality of magnetic particles. Each magnetic particle functions as a solid phase. That is, an antibody layer (or antigen layer) is provided on the surface of each magnetic particle.

The reagent dispensing mechanisms 30 and 32 are provided adjacent to the reagent supply section 16 and the reaction section 14. The reagent dispensing mechanism 30 has a pivot arm 60, and a nozzle 62 at a tip end of the arm 60. The reagent dispensing mechanism 32 has a pivot arm 64, and a nozzle 65 at a tip end of the arm 64. The nozzles 62 and 65 are non-replaceable nozzles; that is, cleanable nozzles. The reagent dispensing mechanisms 30 and 32 suction specific reagents and dispense the suctioned reagents into specific cuvettes.

The light detection section 18 detects light emitted in the cuvette after the enzymatic reaction. The concentration and the like of the substance to be analyzed are calculated based on the detected values. To transfer the cuvette, the cuvette transfer mechanisms 24 and 26 are operated.

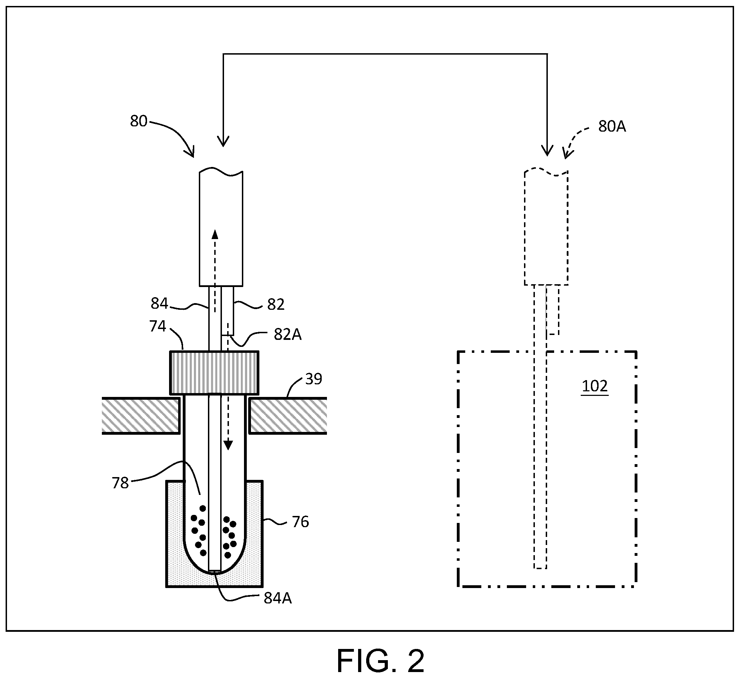

FIG. 2 shows BF cleaning and nozzle cleaning that are performed alternately. The left side of FIG. 2 schematically shows BF cleaning, while the right side schematically shows nozzle cleaning.

As shown on the left side of FIG. 2, a cuvette 74 is held in the holding hole in the turntable 39. A plurality of magnetic particles 78 in the cuvette 74 are captured by magnetic force generated by a magnet 76. A BF cleaning nozzle 80 has a discharge nozzle 82 and a suction nozzle 84 integrated with each other. The discharge nozzle 82 and the suction nozzle 84 are each made of a metal, such as stainless steel. The discharge nozzle 82 has a discharge port 82A, and the suction nozzle 84 has a suction port 84A. The discharge port 82A is positioned higher than the suction port 84A. In the configuration example shown in FIG. 2, the discharge port 82A is positioned higher than a top surface of the cuvette 74, and the suction port 84A is in contact with an inner bottom surface of the cuvette 74. Although the suction nozzle 84 is provided with a plurality of grooves or notches connected to the suction port 84A, they are not shown in the figure.

After the plurality of magnetic particles 78 are captured, the BF cleaning nozzle 80 is moved downward. During this movement, a reaction solution in the cuvette 74 is suctioned by the suction nozzle 84. At this time, the descending speed of the BF cleaning nozzle 80 is set to correspond to the descending speed of the solution level. The downward movement of the BF cleaning nozzle 80 terminates when a lower end of the suction nozzle 84 contacts the inner bottom surface of the cuvette 74. After the entirety of the reaction solution is suctioned, the BF cleaning solution, which is discharged from the discharge nozzle, is poured into the cuvette 74. Subsequently, the BF cleaning solution in the cuvette 74 is suctioned by the suction nozzle 84. The combination of discharging the BF cleaning solution and suctioning the BF cleaning solution is performed repeatedly as necessary. After BF cleaning, the BF cleaning nozzle 80 is moved upward. It should be noted that the reaction solution in the cuvette 74 may be suctioned by the suction nozzle 84 after the downward movement of the BF cleaning nozzle 80 is completed.

As shown on the right side of FIG. 2, a nozzle cleaning unit 102 is used for nozzle cleaning. Reference numeral 80A indicates the BF cleaning nozzle during nozzle cleaning. As described above, BF cleaning and nozzle cleaning are performed alternately.

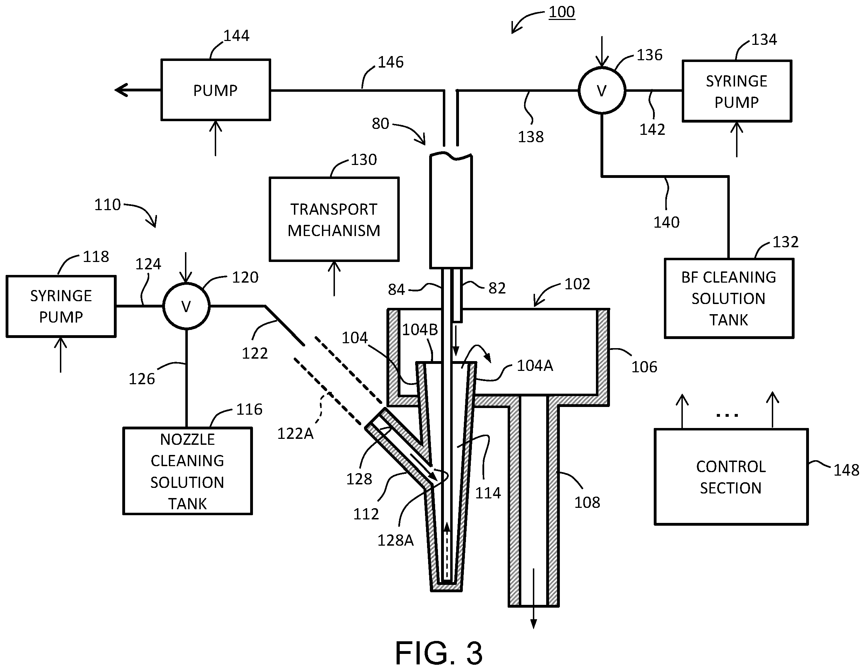

FIG. 3 shows the BF cleaning equipment 100 according to the embodiment. FIG. 3 illustrates the BF cleaning equipment 100 during nozzle cleaning. The BF cleaning equipment 100 has the BF cleaning nozzle 80, the nozzle cleaning unit 102, an injection mechanism 110, a transport mechanism 130, a BF cleaning solution tank 132, a syringe pump 134, a pump 144, and the like.

The nozzle cleaning unit 102 is made of, for example, a transparent resin and is composed of a cleaning tank 104, a frame body 106, and a drain (drain pipe) 108. In the embodiment, the cleaning tank 104, the frame body 106, and the drain 108 are integrated. They may be configured as separate parts. The frame body 106 has a box-like shape with an opening facing upward. An upper portion 104A of the cleaning tank 104 is inserted into the frame body 106. The cleaning tank 104 has an opening 104B. The cleaning solution overflowing from the cleaning tank 104 is collected in the frame body 106 and drained through the drain 108. The inner bottom surface of the frame body 106 is inclined so as to guide the cleaning solution toward the drain 108. However, this is not shown in the figure.

An interior space 114 of the cleaning tank 104 has a truncated cone shape that widens upward. Specifically, the size of the horizontal cross section of the interior space 114 gradually increases from bottom to top. The bottom surface of the interior space 114 has a circular shape, and the opening 104B also has a circular shape. The cleaning tank 104 itself also has a truncated cone shape. FIG. 3 shows the BF cleaning nozzle 80 at the end of the downward movement. The lower end of the suction nozzle 84 is in contact with the inner bottom surface of the cleaning tank 104. In the illustrated example configuration, the discharge port of the discharge nozzle 82 is positioned lower than the height of an upper edge of the frame body 106. The height of the upper edge of the frame body 106 may be made lower.

The cleaning tank 104 is provided with a branch pipe 112. The cleaning tank 104 and the branch pipe 112 are integrated. The branch pipe 112 is connected to a pipe 122. In FIG. 3, a portion 122A of the pipe 122 is indicated by dashed lines, while the remaining portion of the pipe 122 is shown schematically.

The injection mechanism 110 has a nozzle cleaning solution tank 116, a syringe pump 118, a three-way valve 120, and a flow path 128. The flow path 128 is the interior of the pipe 122 and the interior of the branch pipe 112. The branch pipe 112 may be regarded as part of the injection mechanism 110.

An opening 128A is an outlet of the flow path 128. The opening 128A faces the interior space 114 of the cleaning tank 104 and is connected to an inner surface of the cleaning tank 104. As described below, a second central axis of the flow path 128 is inclined with respect to a first central axis of the cleaning tank 104.

A pipe 126 is provided between the nozzle cleaning solution tank 116 and the three-way valve 120, and a pipe 124 is provided between the syringe pump 118 and the three-way valve 120. When the nozzle is cleaned with the nozzle cleaning solution, first, the nozzle cleaning solution in the nozzle cleaning solution tank 116 is drawn into the syringe pump 118. Next, the nozzle cleaning solution is delivered from the syringe pump 118 toward the flow path 128. This causes the cleaning solution to be injected into the interior space 114 of the cleaning tank 104 through the opening 128A. The injection direction is diagonally downward.

A pipe 140 is provided between the BF cleaning solution tank 132 and a three-way valve 136, and a pipe 138 is provided between the discharge nozzle 82 and the three-way valve 136. When the BF cleaning solution is discharged, first, the BF cleaning solution in the BF cleaning solution tank 132 is drawn into the syringe pump 134. Next, the BF cleaning solution is delivered from the syringe pump 134 toward the discharge nozzle 82. This causes the BF cleaning solution to flow out of the discharge port.

The pump 144 is a drain pump. A pipe 146 is provided between the pump 144 and the suction nozzle 84. The cleaning solution suctioned by the suction nozzle 84 is drained to the outside via the pipe 146 and the pump 144.

In the embodiment, the nozzle cleaning solution is, for example, a strong alkaline cleaning solution containing a surfactant or the like. A weak alkaline cleaning solution may also be used as the nozzle cleaning solution, or a strong acidic cleaning solution or a weakly acidic cleaning solution may be used. The BF cleaning solution is a neutral solution containing a buffer, a surfactant, and the like. The BF cleaning solution may have a certain range within the neutral range. It should be noted that any nozzle cleaning solution may be used so long as it has a stronger cleaning action than the BF cleaning solution, and the nozzle cleaning solutions may be switched depending on the reagent, the specimen, or the like.

When the alkaline cleaning solution or the acidic cleaning solution is used, for example, proteins on the container surface tend to be decomposed or peeled off. When the acidic cleaning solution is used, corrosion of metal materials occurs. When corrosion of metal materials is a concern, it is desirable to use the alkaline cleaning solution.

The transport mechanism 130 transports the BF cleaning nozzle between the BF cleaning position and the nozzle cleaning position. The transport mechanism 130 has a vertical transport mechanism and a horizontal transport mechanism. The plurality of BF cleaning nozzles may be transported by the single transport mechanism 130.

A control section 148 controls the operation of the specimen analyzer. Specifically, the control section 148 controls the operation of the syringe pumps 118, 134, the three-way valves 120, 136, the pump 144, and the transport mechanism 130. As described below, the control section 148 has a function to select between an advanced cleaning mode and a standard cleaning mode based on the reference information that includes the analysis items. The control section 148 also has a function to control the first nozzle cleaning and the second nozzle cleaning performed in the advanced cleaning mode, and a function to control the nozzle cleaning (second nozzle cleaning) performed in the standard cleaning mode. The control section 148 is configured with, for example, a CPU that executes a program.

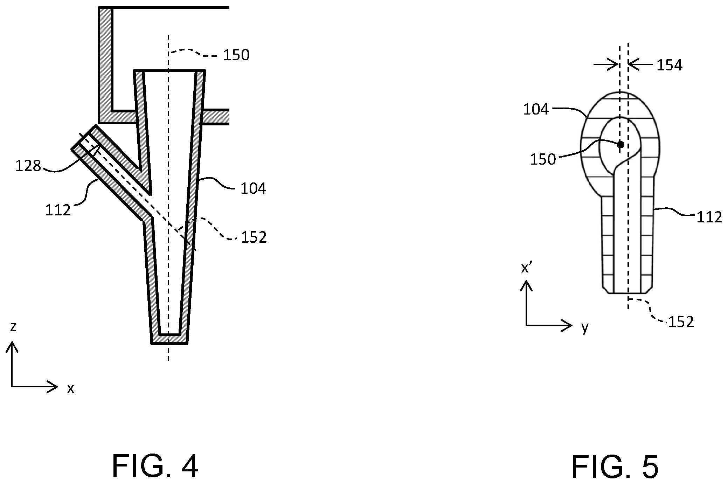

FIG. 4 shows a vertical cross section of the cleaning tank 104. The x direction is a first horizontal direction, and the z direction is the vertical direction. The y direction, which is orthogonal to both the x direction and the z direction, is not shown in FIG. 4. The cleaning tank 104 has a first central axis 150. The first central axis 150 is parallel to the z direction. The flow path 128 has a second central axis 152. The second central axis 152 also serves as the central axis of the branch pipe 112. The second central axis 152 extends diagonally downward from the opening.

In the xz plane, the second central axis 152 is inclined with respect to the first central axis 150. The inclination angle is, for example, within the range of 20 to 80 degrees, and preferably within the range of 30 to 60 degrees. In the illustrated example, the inclination angle is 45 degrees. The inclination angle of the inner surface of the cleaning tank 104 (with respect to the z direction) is, for example, within the range of 2 to 20 degrees.

FIG. 5 shows an x'-y cross section of the cleaning tank 104 and the branch pipe 112. The x' direction is parallel to the second central axis 152. The second central axis 152 passes through a position that is shifted from the first central axis 150 in the horizontal direction, specifically in the y direction. Reference numeral 154 indicates the amount of shift (amount of offset).

By tilting the second central axis 152 downward and shifting it from the first central axis, it becomes possible to facilitate formation of upstream/downstream and rotational flows in the cleaning tank 104 when the nozzle cleaning solution is injected into the tank. Generating such flows with the BF cleaning nozzle inserted in the cleaning tank 104 can improve nozzle cleaning efficiency.

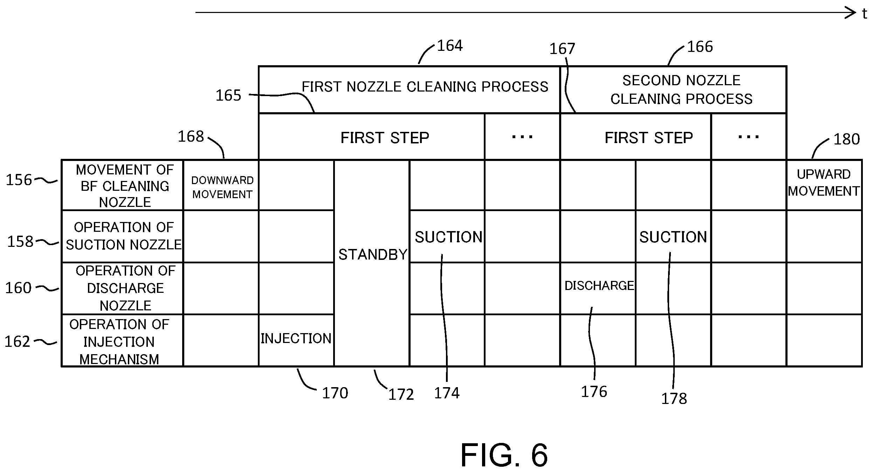

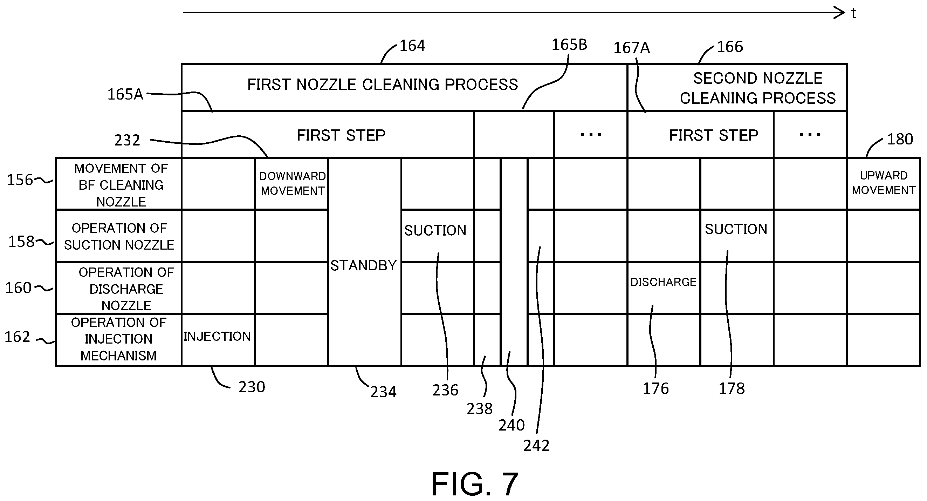

Next, first and second examples of nozzle cleaning operation in the advanced cleaning mode will be described with reference to FIGs. 6 and 7.

FIG. 6 shows the first example of the nozzle cleaning operation. The horizontal axis is the time axis. Reference numeral 164 indicates a first nozzle cleaning process, and reference numeral 166 indicates a second nozzle cleaning process. The nozzle cleaning solution is used in the first nozzle cleaning process 164, while the BF cleaning solution is used in the second nozzle cleaning process 166.

Reference numeral 156 indicates the movement of the BF cleaning nozzle. Reference numeral 158 indicates the operation of the suction nozzle. Reference numeral 160 indicates the operation of the discharge nozzle. Reference numeral 162 indicates the operation of the injection mechanism.

In the first example shown in FIG. 6, before the first nozzle cleaning process 164 is started, the BF cleaning nozzle is moved downward (see reference numeral 168), and the BF cleaning nozzle (specifically, the suction nozzle) is inserted into the cleaning tank. The downward movement of the BF cleaning nozzle stops when the lower end of the suction nozzle contacts the inner bottom surface of the cleaning tank. It should be noted that the step in which the downward movement is performed may be regarded as part of the first nozzle cleaning process 164.

The first nozzle cleaning process 164 is composed of m steps from the first step to the mth step. m is an integer equal to or greater than 1. When m is equal to or greater than 2, the contents of the plurality of steps are identical to one another. That is, in the first nozzle cleaning process 164, the combination of injection 170, standby 172, and suction 174 is repeatedly performed.

A first step 165 will be described in detail as a representative example. First, the nozzle cleaning solution is poured into the cleaning tank by the injection mechanism (see reference numeral 170). At this time, the nozzle cleaning solution is poured toward the highly contaminated area (lower end portion) of the suction nozzle. This type of operation can be referred to as a dynamic cleaning method. Typically, the nozzle cleaning solution is injected into the cleaning tank to cause overflow. In this case, the portion to be cleaned is the entire portion of the suction nozzle inserted in the cleaning tank. Alternatively, a relatively small amount of nozzle cleaning solution that does not cause overflow may be injected. The injection amount and the injection speed of the nozzle cleaning solution may be set as desired. After the nozzle cleaning solution is injected, the system enters a standby state (see reference numeral 172). The duration of the standby state may be set as desired. The duration may be set to zero. After the standby state, the nozzle cleaning solution in the cleaning tank is suctioned by the suction nozzle (see reference numeral 174). Alternatively, to intensively clean the pipe connected to the suction nozzle, the standby time may be set to zero, and the suction nozzle may suction the nozzle cleaning solution while the nozzle cleaning solution is being injected.

After the first nozzle cleaning process 164 is performed, the second nozzle cleaning process 166 is performed. The second nozzle cleaning process 166 is composed of n steps from the first step to the nth step. n is an integer equal to or greater than 1. When n is equal to or greater than 2, the contents of the plurality of steps are identical to one another. That is, in the second nozzle cleaning process 166, the combination of discharge 176 and suction 178 is repeatedly performed.

A first step 167 will be described in detail as a representative example. First, the BF cleaning solution is poured into the cleaning tank from the discharge nozzle (see reference numeral 176). At this time, the BF cleaning solution typically flows down into the cleaning tank along the outer surface of the suction nozzle. Typically, the BF cleaning solution is injected into the cleaning tank so as to cause overflow. Exceptionally, a relatively small amount of BF cleaning solution that does not cause overflow may be injected. The injection amount and the injection speed of the BF cleaning solution may be set as desired. A standby state may be established after the BF cleaning solution is injected. In that case, the duration of the standby state may be set as desired. After discharge of the BF cleaning solution is completed, the BF cleaning solution in the cleaning tank is suctioned by the suction nozzle (see reference numeral 178).

After the second nozzle cleaning process 166 ends, the BF cleaning nozzle is moved upward (see reference numeral 180). During the second nozzle cleaning process 166, the BF cleaning solution serves as a rinse solution to wash away the nozzle cleaning solution.

The above first example makes it possible to achieve a higher level of cleanliness of the BF cleaning nozzle as compared to the case where the BF cleaning nozzle is cleaned using only the BF cleaning solution. Cross-contamination between the cuvettes; i.e., between the reaction solutions, can thus be significantly reduced. As the suction nozzle suctions both the nozzle cleaning solution and the BF cleaning solution, the cleanliness of not only the outer surface but also the inner surface of the suction nozzle can be improved.

FIG. 7 shows the second example of the nozzle cleaning operation. In FIG. 7, the elements shown in FIG. 6 are assigned the same reference numerals as in FIG. 6, and their repeated description will be omitted.

The first nozzle cleaning process 164 is composed of m steps from the first step to the mth step. m is an integer equal to or greater than 1. The content of a first step 165A partially differs from that of a second step 165B and subsequent steps. The content of the second step 165B and each subsequent step is identical. The first step 165A is composed of the combination of injection 230, downward movement 232, standby 234, and suction 236. The second step 165B and each subsequent step is composed of the combination of injection 238, standby 240, and suction 242.

The first step 165A will now be explained in detail. First, the nozzle cleaning solution is injected into the cleaning tank by the injection mechanism (see reference numeral 230). The nozzle cleaning solution may be injected into the cleaning tank so as to cause overflow, or it may be injected into the cleaning tank in an amount that does not cause overflow. The injection amount and the injection speed of the nozzle cleaning solution may be set as desired. Next, the BF cleaning nozzle (specifically, the suction nozzle) is inserted into the cleaning tank as the BF cleaning nozzle (see reference numeral 232) is moved downward. The downward movement of the BF cleaning nozzle stops when the lower end of the suction nozzle contacts the inner bottom surface of the cleaning tank. The BF cleaning nozzle then enters a standby state (see reference numeral 234). The duration of the standby state may be set as desired. The duration may be set to zero. This immersion can be referred to as a static cleaning method.

After the standby state, the nozzle cleaning solution in the cleaning tank is suctioned by the suction nozzle (see reference numeral 236). In the second step 165B, except for the downward movement 232, injection 238, standby 240, and suction 242 are performed in the same manner as in the first step 165A. After the second nozzle cleaning process 166 ends, the BF cleaning nozzle is moved upward (see reference numeral 180).

The above second example makes it possible to improve the cleanliness of the BF cleaning nozzle in a manner similar to that of the first example. Cross-contamination between the cuvettes; i.e., between the reaction solutions, can thus be significantly reduced. The cleanliness of not only the outer surface but also the inner surface of the suction nozzle can be improved. One of the first example and the second example may be selected depending on the type of specimen, the reagent used, or the like.

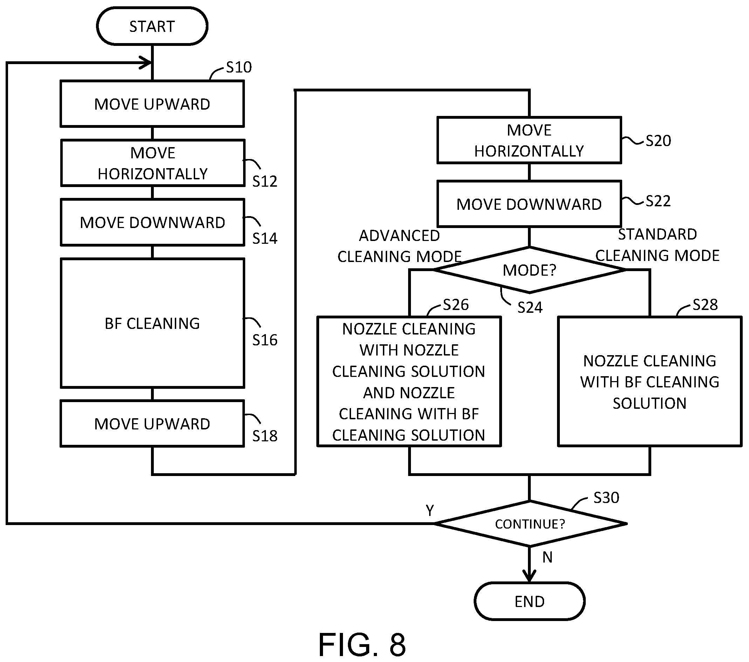

FIG. 8 shows the operation of the BF cleaning equipment. FIG. 8 also shows the control performed by the control section described above. In the illustrated example, in the initial state, the BF cleaning nozzle after cleaning is inserted in the cleaning tank. Steps S10 to S14 correspond to the process of transporting the BF cleaning nozzle from the nozzle cleaning position to the BF cleaning position. Specifically, in S10, the BF cleaning nozzle is moved upward, and in S12, it is moved horizontally. In S14, it is moved downward. The BF cleaning nozzle is inserted into the cuvette in this manner.

In S16, BF cleaning is performed. Steps S18 to S22 correspond to the process of transporting the BF cleaning nozzle from the BF cleaning position to the nozzle cleaning position. Specifically, in S18, the BF cleaning nozzle is moved upward, and in S20, it is moved horizontally. In S22, it is moved downward. The BF cleaning nozzle is inserted into the cleaning tank in this manner.

In S24, one of the advanced cleaning mode (first cleaning mode) and the standard cleaning mode (second cleaning mode) is selected based on reference information. The reference information includes analysis items. The analysis items may be regarded as information for identifying the substance to be measured and the reagent set to be used. In S24, the advanced cleaning mode or the standard cleaning mode is selected according to the reagent set to be used. S24 may be performed earlier.

In step S26, the advanced cleaning mode is performed. Specifically, the first nozzle cleaning process using the nozzle cleaning solution and the second nozzle cleaning process using the BF cleaning solution are performed as shown in FIGs. 6 and 7. On the other hand, in S28, the standard cleaning mode is performed. Specifically, only the second nozzle cleaning process using the BF cleaning solution is performed. When it is determined in S30 to continue the operation, S10 and subsequent steps are performed again.

In the above operation example, the advanced cleaning mode is selected, for example, when the degree of contamination of the BF cleaning nozzle is high, when a specific reagent that is difficult to clean is used, or when high-precision measurement is required. The advanced cleaning mode can achieve a higher level of cleanliness of the BF cleaning nozzle as compared to the standard cleaning mode. On the other hand, the standard cleaning mode is selected, for example, when the degree of contamination of the BF cleaning nozzle is low, when a general reagent is used, or when standard-precision measurement is required. The standard cleaning mode is economical, as it can reduce consumption of nozzle cleaning solution.

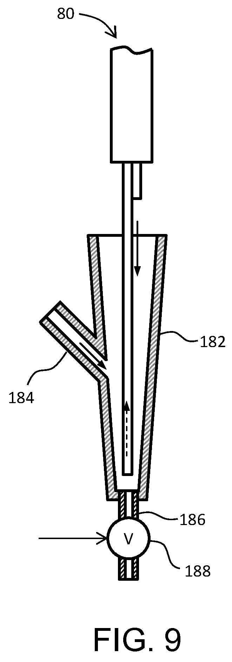

Next, some variations of the cleaning tank will be described with reference to FIGs. 9 to 11. FIG. 9 shows a first variation of the cleaning tank. The bottom of a cleaning tank 182 is connected to a drain 186, and an electromagnetic valve 188 is provided on the drain 186. The cleaning tank 182 is provided with a branch pipe 184 for injecting the nozzle cleaning solution. By using the suction nozzle along with the drain 186 to drain the cleaning solution from the cleaning tank 182, the time required to drain the cleaning solution can be reduced. To store the cleaning solution in the cleaning tank 182, the electromagnetic valve 188 is closed.

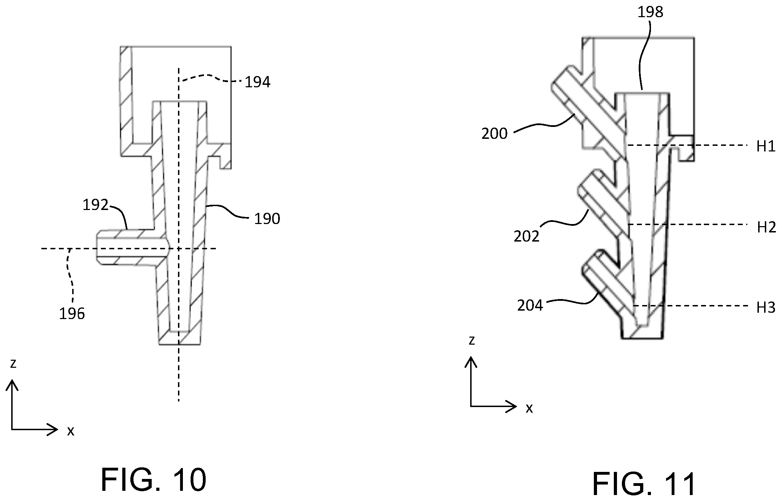

FIG. 10 shows a second variation of the cleaning tank. A cleaning tank 190 is provided with a branch pipe 192. The branch pipe 192 is positioned horizontally. That is, a second central axis 196 of the branch pipe 192 is orthogonal to a first central axis 194 of the cleaning tank 190. The branch pipe 192 may be provided with respect to the cleaning tank 190 such that the second central axis 196 passes through a position that is offset from the first central axis 194 in the horizontal direction. The branch pipe 192 may be provided at the upper or lower portion of the cleaning tank 190 instead of at the middle portion of the cleaning tank 190.

FIG. 11 shows a third variation of the cleaning tank. Three branch pipes 200, 202, 204 are connected to a cleaning tank 198 at three heights H1, H2, H3 in the up-and-down direction. The central axis of each of the branch pipes 200, 202, 204 is inclined. The angle of inclination of the axes with respect to the z-axis is, for example, 45 degrees.

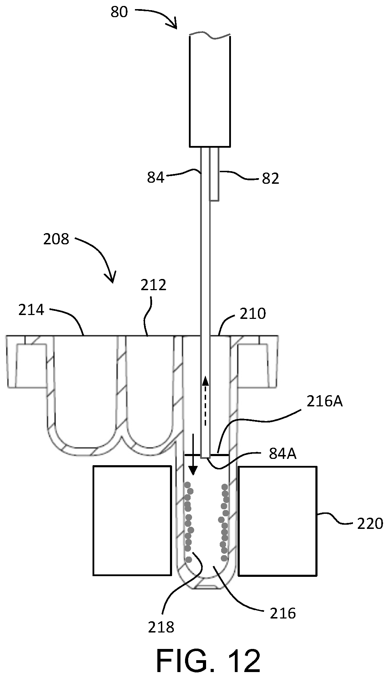

FIG. 12 shows BF cleaning performed in a cartridge-based specimen analyzer. A cartridge 208 has a first tank 210, a second tank 212, and a third tank 214. For example, the first tank 210 is pre-filled with a first reagent. A specimen is injected into the first tank 210. This causes an immune reaction in the first tank 210. The second tank 212 and the third tank 214 are pre-filled, as necessary, with a second reagent, a diluent, or the like.

After the immune reaction, while a plurality of magnetic particles 218 in the first reagent are captured by the magnetic force of a magnet 220, a reaction solution 216 in the first tank 210 is suctioned by the suction nozzle 84 of the BF washing nozzle 80. In this case, the descending speed of the BF cleaning nozzle 80 is set according to the descending speed of a solution level 216A. The downward movement and the suction operation of the BF cleaning nozzle 80 are controlled so that the insertion amount of the suction nozzle 84 into the reaction solution 216 is constant. After the reaction solution is suctioned, the BF cleaning solution discharged from the discharge nozzle 82 flows into the first tank 210. Discharge and suction of the BF cleaning solution is repeated.

After BF cleaning, the BF cleaning nozzle 80 is transported from the BF cleaning position to the nozzle cleaning position. The BF cleaning nozzle 80 is then cleaned by means of the configuration shown in FIG. 3. At this time, one of the advanced nozzle cleaning mode and the standard nozzle cleaning mode is selected.

As described above, the BF cleaning equipment according to the embodiment may be applied to the cartridge-based specimen analyzer.

### REFERENCE SIGNS LIST

80 BF cleaning nozzle, 82 discharge nozzle, 84 suction nozzle, 100 BF cleaning equipment, 102 nozzle cleaning unit, 104 cleaning tank, 110 injection mechanism, 112 branch pipe, 128 flow path, 128A opening, 148 control section.

## Claims

1. A specimen analyzer comprising:
a BF cleaning nozzle that comprises
a discharge nozzle that discharges a BF cleaning solution into a reaction vessel during BF cleaning, and
a suction nozzle that suctions a liquid in the reaction vessel during the BF cleaning;
a cleaning tank in which the BF cleaning nozzle is inserted during cleaning of the BF cleaning nozzle;
an injection mechanism that injects into the cleaning tank a nozzle cleaning solution different from the BF cleaning solution; and
a control section that controls an operation of the BF cleaning nozzle and an operation of the injection mechanism, wherein the control section controls, during cleaning of the BF cleaning nozzle using the cleaning tank, first nozzle cleaning that cleans the BF cleaning nozzle with the nozzle cleaning solution and second nozzle cleaning that cleans the BF cleaning nozzle with the BF cleaning solution.

2. The specimen analyzer according to Claim 1, wherein
in the first nozzle cleaning, the nozzle cleaning solution is injected into the cleaning tank by the injection mechanism, and then the nozzle cleaning solution in the cleaning tank is suctioned by the suction nozzle, and
in the second nozzle cleaning, the BF cleaning solution is discharged from the discharge nozzle into the cleaning tank, and then the BF cleaning solution in the cleaning tank is suctioned by the suction nozzle.

3. The specimen analyzer according to Claim 1 or 2, wherein the second nozzle cleaning is performed after the first nozzle cleaning.

4. The specimen analyzer according to any one of Claims 1 to 3, wherein at the start of the first nozzle cleaning, the nozzle cleaning solution is injected into the cleaning tank to thereby store the nozzle cleaning solution in the cleaning tank, and then the BF cleaning nozzle is inserted into the cleaning tank.

5. The specimen analyzer according to any one of Claims 1 to 3, wherein at the start of the first nozzle cleaning, the nozzle cleaning solution is injected into the cleaning tank while the BF cleaning nozzle is being inserted into the cleaning tank or after the BF cleaning nozzle is inserted into the cleaning tank.

6. The specimen analyzer according to any one of Claims 1 to 5, wherein the injection mechanism has a flow path for injecting the nozzle cleaning solution into an interior space of the cleaning tank, the flow path comprising an opening facing the interior space of the cleaning tank.

7. The specimen analyzer according to Claim 6, wherein
the cleaning tank has a first central axis that is a vertical axis,
the flow path has a second central axis that is an inclined axis,
the second central axis extends diagonally downward from the opening, and
the nozzle cleaning solution is injected from the opening along the second central axis.

8. The specimen analyzer according to Claim 7, wherein the second central axis passes through a position offset from the first central axis in the horizontal direction.

9. The specimen analyzer according to Claim 6, wherein the interior space of the cleaning tank has a truncated cone shape that widens upward.

10. A nozzle cleaning method of cleaning a BF cleaning nozzle, wherein
the BF cleaning nozzle comprises
a discharge nozzle that discharges a BF cleaning solution into a reaction vessel during BF cleaning, and
a suction nozzle that suctions a liquid in the reaction vessel during the BF cleaning, and
the nozzle cleaning method comprises
a first cleaning step of cleaning a portion of the BF cleaning nozzle to be cleaned that is inserted in a cleaning tank with a nozzle cleaning solution different from the BF cleaning solution, and
a second cleaning step of cleaning the portion to be cleaned that is inserted in the cleaning tank with the BF cleaning solution.

11. The nozzle cleaning method according to Claim 10, comprising a selection step of selecting one of a first cleaning mode and a second cleaning mode based on reference information including specimen analysis items, wherein
when the first cleaning mode is selected, the second cleaning step is performed after the first cleaning step, and
when the second cleaning mode is selected, the second cleaning step is performed without performing the first cleaning step.

12. The nozzle cleaning method according to Claim 10, wherein
the BF cleaning solution is a neutral cleaning solution, and
the nozzle cleaning solution is an alkaline or acidic cleaning solution.
